# EUROPEAN PATENT SPECIFICATION

(11) **EP 0 401 257 B1**
(45) Date of publication and mention of the grant of the patent: **27.09.1995**
(21) Application number: 89902520.9
(22) Date of filing: 14.02.1989
(51) Int. Cl.: G01N 17/00, G01N 27/30, G01N 27/416

(54) **METHOD AND SYSTEM FOR MEASURING THE CORROSION PROPERTIES OF SPECIMENS**
VORRICHTUNG UND VERFAHREN ZUM MESSEN DER KORROSIONSEIGENSCHAFTEN VON SPECIMEN
PROCEDE ET SYSTEME SERVANT A MESURER LES PROPRIETES DE CORROSION DE SPECIMENS

(30) Priority: 15.02.1988 FI 880709
(43) Date of publication of application: 12.12.1990
(73) Proprietor: VALTION TEKNILLINEN TUTKIMUSKESKUS, 02150 Espoo 15 (FI)
(72) Inventor: AALTONEN, Pertti VTT/Metallilaboratorio, SF-02150 Espoo (FI); SELIN, Lauri VTT/Metallilaboratorio, SF-02150 Espoo (FI); SILEN, Lars VTT/Metallilaboratorio, SF-02150 Espoo (FI); KEKKONEN, Timo VTT/Metallilaboratorio, SF-02150 Espoo (FI)
(74) Representative: Reinhard - Skuhra - Weise & Partner
(86) International application number: FI8900023
(87) International publication number: WO8907755

(56) References cited:
- EP-A- 0 100 813
- CA-A- 1 193 659
- US-A- 3 763 007

## Description

The present invention concerns a specimen testing procedure as defined in the preamble of Claim 1, and a potentiostat as defined in the preamble of Claim 4.

In existing potentiostats, see CA-A- 1 193 659 for example, the corrosion properties of specimens are studied in the way that the test specimen in an electrolyte is arranged to carry a given potential, whereby then the corrosion currents, or the dissolution of metal from the specimen, can be studied. However, a comparatively high excitation current is required to establish the given sample potential, and this current may generate hydrogen or oxygen on the counter-electrode surface. Also, in an electrolyte with poor conductivity, such as suitable water, the resistance of the electrolyte is comparatively high, whereby the voltage drop is also high, resulting in major errors: at their maximum, the errors may amount to several hundred mV. The measurement of the corrosion currents will consequently be inaccurate and the water chemistry of the measuring arrangement changes so that it becomes difficult to obtain reliable and comparable results.

The object of the invention is elimination of the above-mentioned drawbacks. Specifically, the aim of the invention is to present a novel testing procedure, and an equivalent apparatus, with the aid of which corrosion measurements can be carried out free of interference and accurately, and possibly in extensive series, employing several different potential levels simultaneously.

Regarding the features which are characteristic of the invention, reference is made to the claims section.

In the specimen testing procedure of the invention the specimen placed in an electrolyte is arranged to carry a given potential, for studying the corrosion properties of the specimen. As taught by the invention, in the procedure are always employed two specimens at different potentials in the way that one of the specimens is used as auxiliary specimen, and this specimen is controlled to carry its own potential of repose so that no current passes therefrom. The rest of the specimens, the principal specimens, are controlled to carry suitable potentials with reference to the auxiliary specimen in such manner that the corrosion currents pass between the principal and auxiliary specimens, substantially free from the excitation current required to establish the potential. Hereby the sole currents which are significant within the limits of measuring accuracy are corrosion currents proper.

In an advantageous embodiment of the invention there is a plurality of principal specimens or principal specimen groups, stepped to carry different potentials so that the corrosion currents of all these specimens are simultaneously measured. The currents flowing between principal specimens at different potential levels are then negligible in comparison with the currents between each principal specimen and the auxiliary specimen, whereby adequate accuracy of measurement is maintained.

Advantageously, when several principal specimens or principal specimen groups are used, these potentials are controlled with the aid of separate, potential level-specific circuits. In another embodiment of the invention these potential levels of the different principal specimens are controlled with one and the same circuit, in this case the potential levels being interconnected with suitable resistances. For such resistances advantageously steplessly variable resistances are used, in which case the potential levels can be steplessly adjusted relative to each other.

The potentiostat of the invention comprises an auxiliary specimen immersed in the electrolyte and connected to a current source and at least one principal specimen connected to a second current source, to control the principal specimen to carry the desired potential level relative to the auxiliary specimen. Advantageously, the auxiliary specimen is controlled with the aid of said first current source substantially to its potential of repose, whereby virtually the sole currents flowing in the potentiostat are corrosion currents between the principal specimen and the auxiliary specimen.

In an advantageous embodiment of the invention the potentiostat comprises a plurality of different potential levels to which the principal specimens or groups of principal specimens have been allocated. In that case, in an embodiment of the invention, to each potential level corresponds a specific, separate current source by the aid of which the potential level can be controlled. In another embodiment of the invention for the principal specimens is provided only one current source, the various potential levels, or the principal specimens or principal specimen groups carrying them, being interconnected through resistances. Said resistances are in this case advantageously adjustable so that the potential levels can be steplessly adjusted relative to each other in such way as is desired, for adjusting the corrosion currents specimen-specifically to be appropriate.

The advantage afforded by the present invention over the state of art is that no high currents need be driven through the electrolyte in order to achieve a given potential: changing the potential of the specimen is accomplished through an external system. It is equally possible with the aid of the procedure to eliminate largely the harmful I*R drop effect because the current flowing in the liquid is minimal. Likewise, owing to the external control the specimen that is being controlled can be forced to very high potentials with reference to the water, even to potentials which are impossible in the standard procedure. It is also an advantage that thanks to the external potential control no high current delivery capacity is required in the auxiliary potentiostat.

It is a further advantage that the current measured between the principal specimen and the auxiliary specimen represents the corrosion current, not the excitation current required for achieving a given potential, as is the case in existing procedures and apparatus. Furthermore, the water chemistry on the specimen surface is appreciably better than that in any apparatus representing the state of art. This is particularly notable at high potentials because establishment of the potential requires no high currents, which would for instance decompose water on the surface of the so-called counter-electrode specimen. An additional advantage is the fact that, when desired, in the system of the invention a truly remarkable number of specimens can be connected to be simultaneously measured.

The invention is described in detail in the following, with reference to the attached drawing, wherein:-
Fig. 1 presents schematically a potentiostat representing the state of art,
Fig. 2 presents a potentiostat according to the invention,
Fig. 3 presents another potentiostat according to the invention, and
Fig. 4 presents schematically an experimental set-up according to the invention.

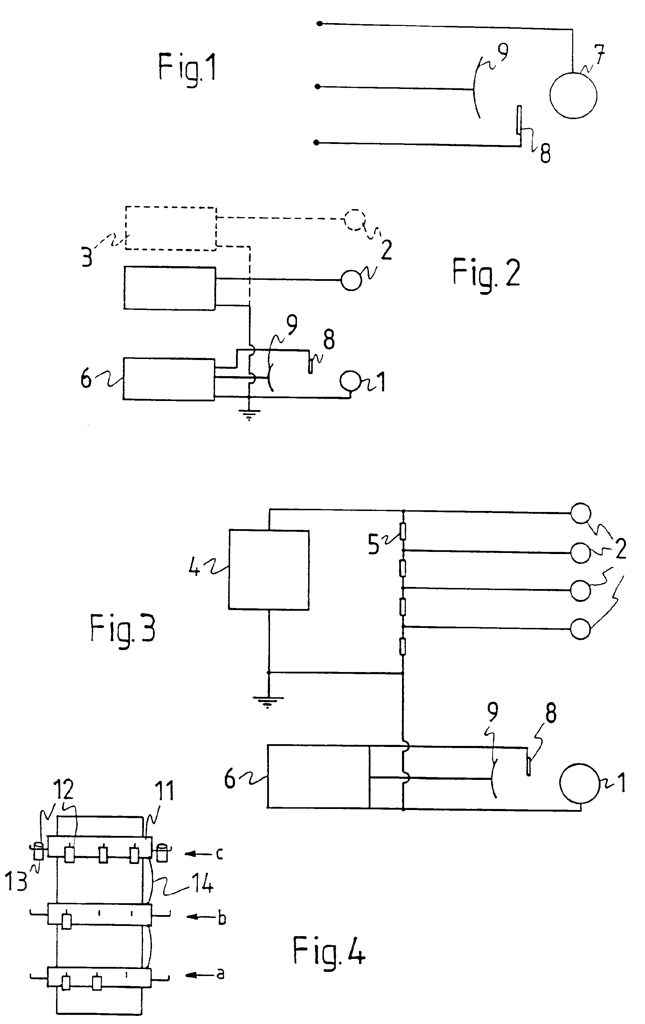

Fig. 1 presents schematically a potentiostat representing the state of art, in this potentiostat being immersed in an electrolyte: a specimen 7, a reference electrode 8, and a counter-electrode 9. When in a case like this the specimen is forced to carry a given potential, especially in an electrolyte with poor conductivity a comparatively great interference term is produced, which arises from the comparatively high current that is required in order to achieve said potential. As a consequence, it is difficult to measure the corrosion currents by means of the experimental set-up of prior art.

In Fig. 2 is shown the principle diagram of the specimen testing procedure of the invention. The apparatus of the invention is characterized in that it always comprises at least two separate current systems, one of them, 6, connected to an auxiliary specimen 1 and the other, 3, to the principal specimen 2. The current source 6 is employed here to set the auxiliary specimen 1 to its potential of repose, and the principal specimen 2 is controlled with the aid of the circuit 3 to carry the potential which it is desired to have, whereby substantially the sole currents flowing between the specimens, that is between the auxiliary specimen 1 and the principal specimen 2, are corrosion currents, which thus can be accurately measured. As shown with dotted lines in Fig. 2, a plurality of separate circuits 3 can be connected to this system, each such circuit connected to its own principal specimen 2, or to a specific group of principal specimens, the corrosion currents always flowing between the principal specimen and the auxiliary specimen.

In Fig. 3 is presented another embodiment of the invention, which also comprises a plurality of principal specimens 2 at different potential levels but only one circuit 4 for establishing these potentials. The different potential levels, or principal specimens 2, are here interconnected through resistances 5, and these resistances are advantageously furthermore steplessly adjustable rheostats, whereby the principal specimens at different potential levels can be steplessly adjusted to be at desired voltage levels relative to each other and to the auxiliary specimen 1, in order to obtain such corrosion properties as are desired in each instance.

In Fig. 4 is presented a set-up conforming to the invention, comprising a supporting structure designed to be immersed in the electrolyte and comprising three potential levels a, b, c, one above the other. Each potential level consists of a frame 11 of conductive material and of holders 12 provided therein, in which the specimens 13 to be examined can be placed. The frames are interconnected with resistance wire 14, whereby owing to the voltage drop produced in said resistance wire the different frames are at different voltage levels and therefore specimens requiring different corrosion currents can be simultaneously studied, or mutually similar specimens can be simultaneously studied with corrosion currents of different magnitudes.

In the foregoing the invention has been described in detail, referring to some advantageous embodiments thereof. However, these do not in any way delimit the invention, of which the different embodiments may vary within the scope of the inventive idea defined by the claims following below.

## Claims

1. A specimen testing procedure, wherein a specimen (1, 2) immersed in an electrolyte with a counter electrode (9) and a reference electrode (8) is arranged to carry a given potential, for studying the corrosion properties of the specimen, characterized by the steps of employing at least two specimens (1, 2) at different potentials simultaneously,
one of said specimens (1, 2) being used as an auxiliary specimen (1) which is controlled to carry its potential of repose,
at least one other of said specimens (1, 2) being used as at least one principal specimen (2) which is controlled at a different potential relative to the potential of said auxiliary specimen (1),
and measuring the corrosion current between said at least one principal specimen (2) and said auxiliary specimen (1) free from excitation currents required to establish said different potentials.

2. The specimen testing procedure according to claim 1, comprising controlling the potentials of one of a plurality of said principal specimens (2), or groups of principal specimens (2) at different potentials with circuits specific to each specimen or group, respectively.

3. The specimen testing procedure according to claim 1, comprising controlling the potentials of one of a plurality of said principal specimens (2), or groups of principal specimens (2), at different potentials with one circuit (4), the principal specimens, or groups of principal specimens, being interconnected through resistances (5).

4. A potentiostat for studying the corrosion properties of a specimen (1, 2) immersed in an electrolyte, comprising a counter electrode (9) and a reference eletrode (8)
characterized by
a first current source (6) connected to an auxiliary specimen (1) and said counter electrode (9), to control said auxiliary specimen (1) to carry its potential of repose,
and at least one second current source (3, 4) connected to at least one principal specimen (2) and said auxiliary specimen (1), to control said at least one principal specimen (2) to carry a desired potential level which is different relative to the potential of said auxiliary specimen (1).

5. Potentiostat according to claim 4, comprising a separate current source for each potential level that is being used.

6. Potentiostat according to claim 4, comprising at least one current source (4) for a plurality of the specimens, and wherein the specimens are coupled through resistances (5) for defining the potential difference.

## Patentansprüche

1. Verfahren zum Testen eines Prüflings, bei dem ein Prüfling (1, 2), welcher in einen Elektrolyten mit einer Gegenelektrode (9) und einer Referenzelektrode (8) eingetaucht wird, derart angeordnet wird, daß er ein vorgegebenes Potential führt, welches dazu dient, die Korrosionseigenschaften des Prüflings zu studieren bzw. zu erfassen, gekennzeichnet durch die gleichzeitige Verwendung von wenigstens zwei Prüflingen (1, 2) bei verschiedenen Potentialen, wobei
einer der Prüflinge (1, 2) als ein Hilfsprüfling (1) benutzt wird, welcher derart gesteuert wird, daß er auf Ruhepotential liegt,
wenigstens einer der Prüflinge (1, 2) als wenigstens ein Hauptprüfling (2) benutzt wird, welcher derart gesteuert wird, daß er relativ zu dem Potential des Hilfsprüflings (1) ein unterschiedliches Potential aufweist,
und wobei der Korrosionsstrom zwischen dem wenigstens einen Hauptprüfling (2) und dem Hilfsprüfling (1) frei von Erregungsströmen gemessen wird, welche zur Bildung der verschiedenen Potentiale erforderlich sind.

2. Verfahren zum Testen eines Prüflings nach Anspruch 1,
welches ein Steuern der Potentiale von einem Hauptprüfling aus einer Vielzahl an Hauptprüflingen (2) oder Gruppen an Hauptprüflingen (2) bei verschiedenen Potentialen mit Schaltkreisen enthält, welche für jeden Prüfling oder jede Gruppe jeweils spezifisch sind.

3. Verfahren zum Testen eines Prüflings nach Anspruch 1,
welches ein Steuern der Potentiale von einem Hauptprüfling aus einer Vielzahl an Hauptprüflingen (2) oder Gruppen an Hauptprüflingen (2) bei verschiedenen Potentialen mit einem Schaltkreis (4) aufweist, wobei die Hauptprüflinge oder Gruppen an Hauptprüflingen durch Widerstände (5) miteinander verbunden sind.

4. Potentiostat zum Studieren bzw. Erfassen der Korrosionseigenschaften eines Prüflings (1, 2), welcher in einem Elektrolyt eingetaucht ist, mit einer Gegenelektrode (9) und einer Referenzelektrode (8),
gekennzeichnet durch
eine erste Stromquelle (6), welche an einen Hilfsprüfling (1) und die Gegenelektrode (9) zur Steuerung des Hilfsprüflings (1) derart angeschlossen ist, daß er auf Ruhepotential liegt,
und durch wenigstens eine zweite Stromquelle (3, 4), welche an wenigstens einen Hauptprüfling (2) und den Hilfsprüfling (1) zur Steuerung von wenigstens einem Hauptprüfling (2) derart angeschlossen ist, daß er ein gewünschtes Potentialniveau aufweist, welches relativ zu dem Potential des Hilfsprüflings (1) unterschiedlich ist.

5. Potentiostat nach Anspruch 4, mit einer getrennten Stromquelle für jedes Potentialniveau, welches verwendet wird.

6. Potentiostat nach Anspruch 4, mit wenigstens einer Stromquelle (4) für eine Vielzahl an Prüflingen, bei dem die Prüflinge durch Widerstände (5) zur Bestimmung der Potentialdifferenz gekoppelt sind.

## Revendications

1. Procédé pour tester un échantillon, dans lequel un échantillon (1, 2), immergé dans un électrolyte avec une contre-électrode (9) et une électrode de référence (8), est disposé de manière à porter un potentiel donné, pour étudier les propriétés de corrosion de l'échantillon, caractérisé par le fait qu'il comporte des étapes dans lesquelles on emploie au moins deux échantillons (1, 2) simultanément à des potentiels différents,
l'un desdits échantillons (1, 2) étant utilisé en tant qu'échantillon auxiliaire (1) contrôlé afin d'être à son potentiel de repos,
au moins un autre desdits échantillons (1, 2) étant utilisé en tant qu'échantillon principal (2) contrôlé afin d'être à un potentiel différent relativement au potentiel dudit échantillon auxiliaire (1),
et on mesure le courant de corrosion entre ledit ou lesdits échantillons principaux et ledit échantillon auxiliaire (1) en l'absence de courant d'excitation nécessaire à l'établissement desdits différents potentiels.

2. Procédé pour tester un échantillon selon la revendication 1, comprenant le contrôle des potentiels d'un échantillon principal (2) parmi une pluralité d'échantillons principaux (2), ou de groupes d'échantillons principaux (2), portés à différents potentiels, avec des circuits respectivement spécifiques à chaque échantillon ou groupe d'échantillons.

3. Procédé pour tester un échantillon selon la revendication 1, comprenant le contrôle des potentiels d'un échantillon principal (2) parmi une pluralité d'échantillons principaux (2), ou de groupes d'échantillons principaux (2), portés à différents potentiels, avec un circuit (4), les échantillons principaux, ou groupes d'échantillons principaux, étant interconnectés par l'intermédiaire de résistances (5).

4. Régulateur de tension pour étudier les propriétés de corrosion d'un échantillon (1, 2) immergé dans un électrolyte, comprenant une contre-électrode (9), et une électrode de référence (8), caractérisé en ce qu'il comprend :
une première source de courant (6) reliée à un échantillon auxiliaire (1) et à ladite contre-électrode (9), pour contrôler ledit échantillon auxiliaire (1), afin qu'il soit porté à son potentiel de repos, et
au moins une seconde source de courant (3, 4) connectée audit ou auxdits échantillons principaux (2) et audit échantillon auxiliaire (1), pour contrôler ledit échantillon principal (2) ou lesdits échantillons principaux (2) afin qu'il(s) soi(en)t porté(s) à un niveau de potentiel choisi différent relativement au potentiel dudit échantillon auxiliaire (1).

5. Régulateur de tension selon la revendication 4, comprenant une source de courant indépendante pour chaque niveau de potentiel devant être utilisé.

6. Régulateur de tension selon la revendication 4, comprenant au moins une source de courant (4) pour une pluralité d'échantillons, et dans lequel les échantillons sont connectés par l'intermédiaire de résistances (5) afin de définir la différence de potentiel.
